# EUROPÄISCHE PATENTSCHRIFT

(11) **EP 1 208 298 B1**
(45) Veröffentlichungstag und Bekanntmachung des Hinweises auf die Patenterteilung: **09.03.2005**
(21) Anmeldenummer: 00967515.8
(22) Anmeldetag: 10.08.2000
(51) Int. Cl.: F02M 61/18, F02M 61/16, F02M 51/06

(54) **BRENNSTOFFEINSPRITZVENTIL UND VERFAHREN ZUR HERSTELLUNG VON AUSTRITTSÖFFNUNGEN AN VENTILEN**
FUEL INJECTION VALVE AND A METHOD FOR MANUFACTURING EXIT OULETS ON THE VALVE
SOUPAPE D'INJECTION DE CARBURANT ET PROCEDE DE PRODUCTION D'ORIFICES DE SORTIE DANS LES SOUPAPES

(30) Priorität: 11.08.1999 DE 19937961
(43) Veröffentlichungstag der Anmeldung: 29.05.2002
(60) Teilanmeldung: 04027463.1
(73) Patentinhaber: ROBERT BOSCH GMBH, 70442 Stuttgart (DE)
(72) Erfinder: MAIER, Martin, 71696 Moeglingen (DE); HOHL, Guenther, 70569 Stuttgart (DE); DANTES, Guenter, 71735 Eberdingen (DE); NOWAK, Detlef, 74199 Untergruppenbach (DE); HEYSE, Joerg, 74354 Besigheim (DE); KEIM, Norbert, 74369 Loechgau (DE)
(86) Internationale Anmeldenummer: PCT/DE2000/002727
(87) Internationale Veröffentlichungsnummer: WO 2001/011229

(56) Entgegenhaltungen:
- EP-A- 0 116 864
- EP-A- 0 961 026
- DE-A- 19 946 693
- FR-A- 1 028 215
- GB-A- 1 088 666
- US-A- 4 069 978
- US-A- 4 986 478
- US-A- 5 353 992
- YALCIN H ET AL: "KONISCHE EINSPRITZLOCHER EINES KRAFTSTOFFEINSPRITZVENTILS FUER BRENKRAFTMASCHINEN" TECHNIK REPORT,DE,SIEMENS AG.,ERLANGEN, Bd. 2, Nr. 2, Januar 1999 (1999-01), Seiten 73-74, XP000828544 ISSN: 1436-7777
- PATENT ABSTRACTS OF JAPAN vol. 008, no. 170 (M-315), 7. August 1984 (1984-08-07) & JP 59 065562 A (MITSUBISHI JUKOGYO KK;OTHERS: 01), 13. April 1984 (1984-04-13)

## Beschreibung

### Stand der Technik

Die Erfindung geht aus von einem Verfahren zur Herstellung von Austrittsöffnungen an Ventilen nach der Gattung des Anspruchs 1 bzw. des Anspruchs 7.

Aus der DE 196 36 396 A1 ist bereits ein Brennstoffeinspritzventil bekannt, das stromabwärts seiner Ventilsitzfläche, mit der ein Ventilschließkörper zum Öffnen und Schließen des Ventils zusammenwirkt, eine Lochscheibe aufweist. Diese aus einem Blech geformte, topfförmige Lochscheibe besitzt eine Vielzahl von Abspritzöffnungen, durch die der Brennstoff beispielsweise in ein Saugrohr einer Brennkraftmaschine in Richtung eines Einlassventils abgegeben wird. Diese Abspritzöffnungen werden durch Stanzen, Erodieren oder Laserstrahlbohren in die Lochscheibe eingebracht. Die Abspritzöffnungen weisen dabei über ihre axiale Länge durchgehend einen konstanten kreisförmigen bzw. elliptischen Querschnitt auf.

Ein Brennstoffventil, wie im Oberbegriff der Verfahrensansprüche 1 und 7 aufgeführt, ist beispielsweise aus der Druckschrift JP 59 065 562 A bekannt.

Erfindungsgemäße Verfahren zur Herstellung von Austrittsöffnungen an einem Ventil werden durch die Ansprüche 1 und 7 definiert.

### Vorteile der Erfindung

Ein erfindungsgemäß hergestelltes Brennstoffeinspritzventil hat den Vorteil, dass in einfacher und kostengünstiger Weise ein sehr großer Variantenrahmen bezüglich der Durchflüsse, Strahlwinkel und Sprayeigenschaften erzielbar ist. In vorteilhafter Weise werden Strahlwinkelschwankungen reduziert. Außerdem sind Strahl- bzw. Spraystrukturierungen und die Erzeugung von Vollkegel- und Hohlkegelstrahlen auch bei starkem Brennraumgegendruck einfacher realisierbar als bei bekannten Brennstoffeinspritzventilen.

Von Vorteil ist es, dass mit dem Brennstoffeinspritzventil eine sehr hohe Zerstäubungsgüte eines abzuspritzenden Brennstoffs sowie an die jeweiligen Erfordernisse (z.B. Einbaubedingungen, Motorkonfigurationen, Zylinderausformungen, Zündkerzenposition) angepasste Strahl- bzw. Sprayformungen erzielt werden. Als Konsequenz können mit einem solchen Einspritzventil u.a. die Abgasemission der Brennkraftmaschine reduziert und ebenso eine Verringerung des Brennstoffverbrauchs erzielt werden.

Besonders bei außermittigen Austrittsöffnungen, bei denen der Mittelpunkt der Eintrittsebene nicht auf der Ventillängsachse liegt, ist es von Vorteil, wenn der Einlaufabschnitt der Austrittsöffnung eine relativ kleine Öffnungsweite besitzt und der Austrittsbereich dann deutlich aufgeweitet ist. Auf diese Weise können sogar bei solchen Ventilen in vorteilhafter Weise kleine Dichtdurchmesser an der Ventilsitzfläche eingehalten werden. Gegenüber bekannter Ventile gleicher Bauart mit außermittigen Austrittsöffnungen lassen sich die statische hydraulische Schließlast verringern und die Dichtheit am Ventilsitz verbessern.

Von besonderem Vorteil ist es, wenn der Brennstoff vor der Austrittsöffnung mit einem Drall beaufschlagt wird, da dann in dem konturierten Austrittsbereich der Austrittsöffnung wirkungsvoll lokale Brennstoffanhäufungen erzeugt werden, die als Strähnen besonders beim direkten Einspritzen von Brennstoff in einen Brennraum erwünscht sind.

Das erfindungsgemäße Verfahren mit den kennzeichnenden Merkmalen des Anspruchs 1 bzw. des Anspruchs 7 hat den Vorteil, dass mit ihm auf einfache Art und Weise ein Brennstoffeinspritzventil herstellbar ist, mit denen die vorgenannten Vorteile erzielbar sind.

Durch die in den Unteransprüchen aufgeführten Maßnahmen sind vorteilhafte weiterbildungen und Verbesserungen des im Ansprüchen 1 bzw. im Anspruch 7 angegebenen Verfahrens möglich.

Durch die hohe Genauigkeit insbesondere des Laserkonturschneidens können sehr exakt Austrittsbereiche ausgeformt werden, durch die sich die Strahlwinkelschwankungen der abgespritzten Brennstoffsprays reduzieren lassen. Die Formgebung der Austrittsbereiche der Austrittsöffnungen mittels Laser- oder Elektronenstrahlabtragen ist besonders im Vergleich z.B. zum mechanischen Prägen mit Prägestempeln extrem flexibel. So sind beispielsweise Austrittsbereiche von Austrittsöffnungen problemlos herstellbar, die mehreckig, sich in Strömungsrichtung pyramidenstumpfförmig erweiternd oder verjüngend, einen kreisförmigen oder elliptischen Querschnitt aufweisend, sich in Strömungsrichtung kegelstumpfförmig erweiternd oder verjüngend, konvex oder konkav gewölbt, oder gestuft mit mehreren Abschnitten ausgeführt sind.

### Zeichnung

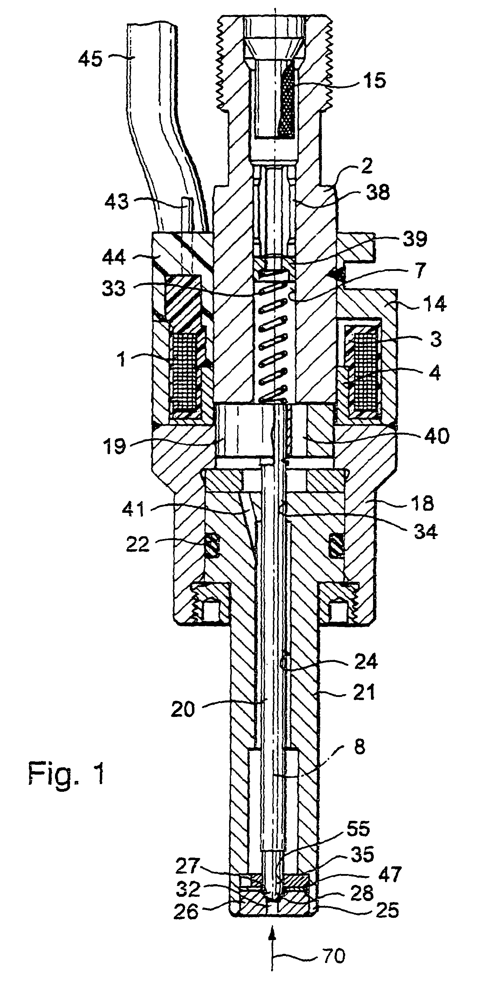

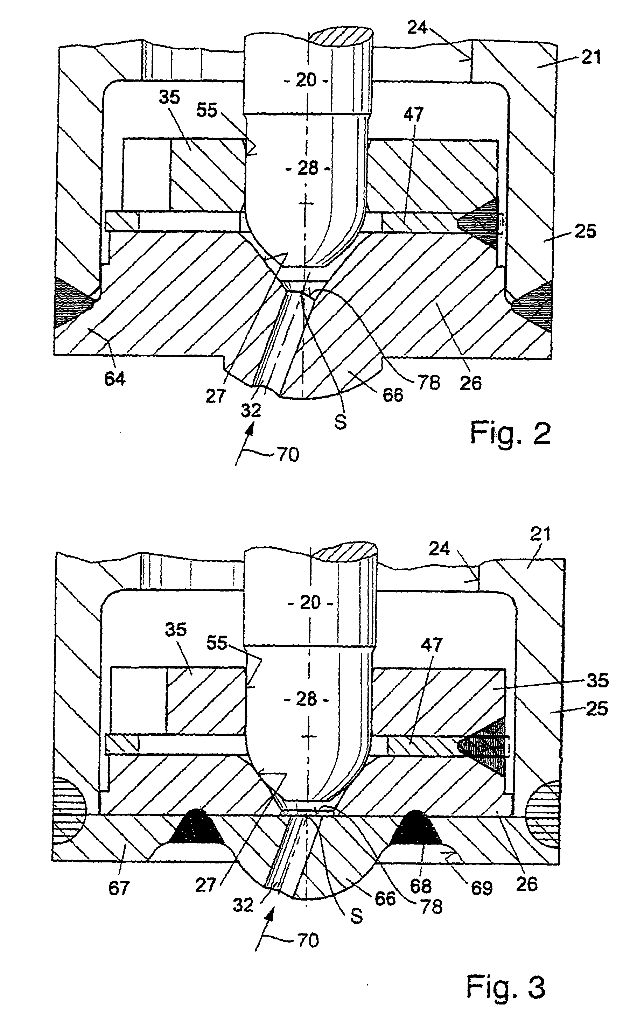

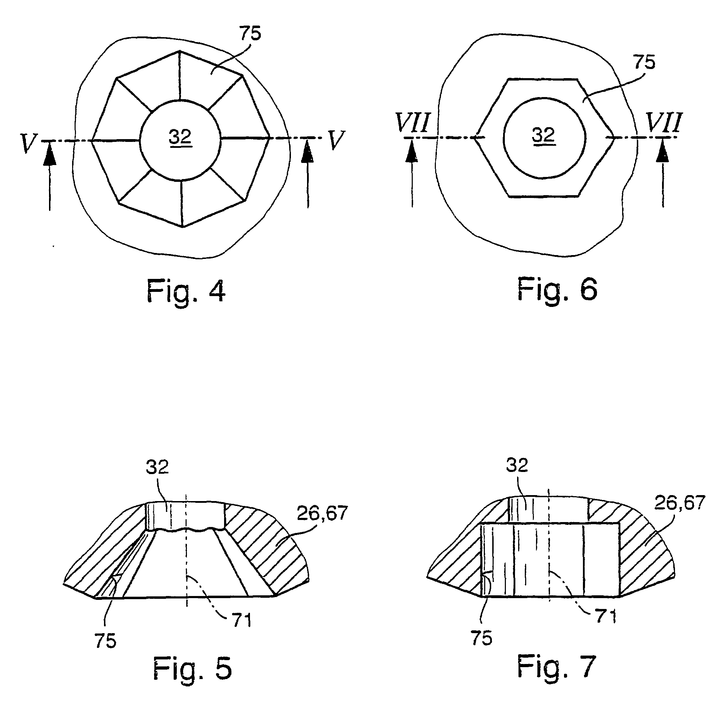

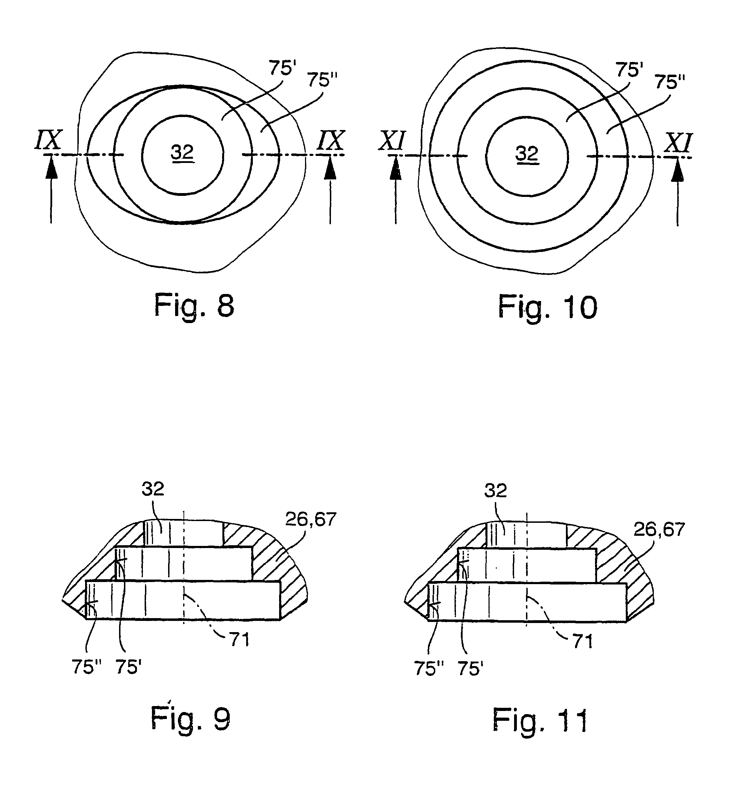

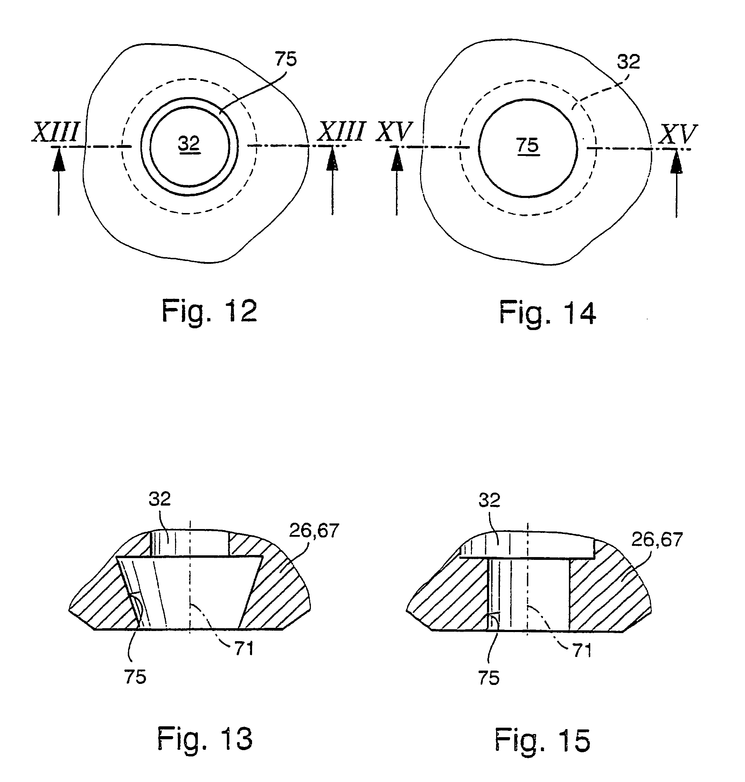

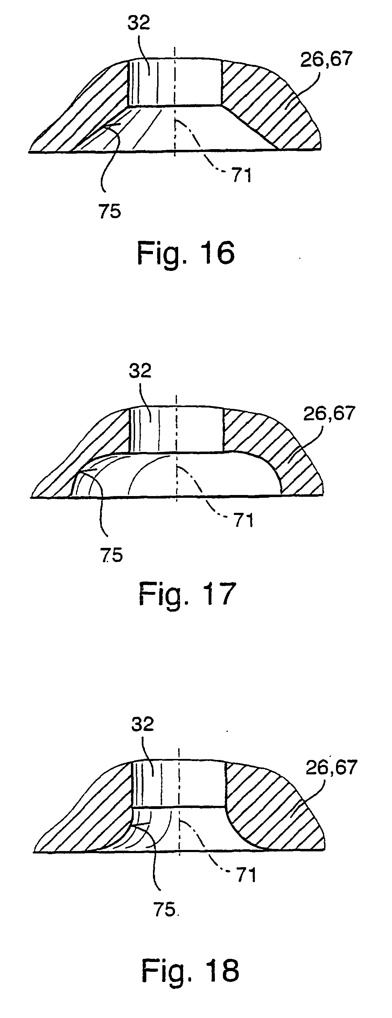

Beispiele von Brennstoffeinspritzventilen sind in den Zeichnungen vereinfacht dargestellt und in der nachfolgenden Beschreibung näher erläutert. Es zeigen Figur 1 ein Brennstoffeinspritzventil in einem Längsschnitt, Figur 2 einen ersten alternativen Führungs- und Sitzbereich, Figur 3 einen zweiten alternativen Führungs- und Sitzbereich, Figur 4 eine erste Austrittsöffnung in einer Unteransicht, Figur 5 einen Schnitt entlang der Linie V-V in Figur 4, Figur 6 eine zweite Austrittsöffnung in einer Unteransicht, Figur 7 einen Schnitt entlang der Linie VII-VII in Figur 6, Figur 8 eine dritte Austrittsöffnung in einer Unteransicht, Figur 9 einen Schnitt entlang der Linie IX-IX in Figur 8, Figur 10 eine vierte Austrittsöffnung in einer Unteransicht, Figur 11 einen Schnitt entlang der Linie XI-XI in Figur 10, Figur 12 eine fünfte Austrittsöffnung in einer Unteransicht, Figur 13 einen Schnitt entlang der Linie XIII-XIII in Figur 12, Figur 14 eine sechste Austrittsöffnung in einer Unteransicht, Figur 15 einen Schnitt entlang der Linie XV-XV in Figur 14, Figur 16 einen Schnitt durch eine siebente Austrittsöffnung, Figur 17 einen Schnitt durch eine achte Austrittsöffnung und Figur 18 einen Schnitt durch eine neunte Austrittsöffnung.

### Beschreibung der Beispiele

Das in der Figur 1 als ein Beispiel dargestellte elektromagnetisch betätigbare Ventil in der Form eines Einspritzventils für Brennstoffeinspritzanlagen von fremdgezündeten Brennkraftmaschinen hat einen von einer Magnetspule 1 zumindest teilweise umgebenen, als Innenpol eines Magnetkreises dienenden, rohrförmigen, weitgehend hohlzylindrischen Kern 2. Das Brennstoffeinspritzventil eignet sich besonders als Hochdruckeinspritzventil zum direkten Einspritzen von Brennstoff in einen Brennraum einer Brennkraftmaschine. Ein beispielsweise gestufter Spulenkörper 3 aus Kunststoff nimmt eine Bewicklung der Magnetspule 1 auf und ermöglicht in Verbindung mit dem Kern 2 und einem ringförmigen, nichtmagnetischen, von der Magnetspule 1 teilweise umgebenen Zwischenteil 4 mit einem L-förmigen Querschnitt einen besonders kompakten und kurzen Aufbau des Einspritzventils im Bereich der Magnetspule 1.

In dem Kern 2 ist eine durchgängige Längsöffnung 7 vorgesehen, die sich entlang einer Ventillängsachse 8 erstreckt. Der Kern 2 des Magnetkreises dient auch als Brennstoffeinlaßstutzen, wobei die Längsöffnung 7 einen Brennstoffzufuhrkanal darstellt. Mit dem Kern 2 oberhalb der Magnetspule 1 fest verbunden ist ein äußeres metallenes (z. B. ferritisches) Gehäuseteil 14, das als Außenpol bzw. äußeres Leitelement den Magnetkreis schließt und die Magnetspule 1 zumindest in Umfangsrichtung vollständig umgibt. In der Längsöffnung 7 des Kerns 2 ist zulaufseitig ein Brennstoffilter 15 vorgesehen, der für die Herausfiltrierung solcher Brennstoffbestandteile sorgt, die aufgrund ihrer Größe im Einspritzventil Verstopfungen oder Beschädigungen verursachen könnten. Der Brennstoffilter 15 ist z. B. durch Einpressen im Kern 2 fixiert.

Der Kern 2 bildet mit dem Gehäuseteil 14 das zulaufseitige Ende des Brennstoffeinspritzventils, wobei sich das obere Gehäuseteil 14 beispielsweise in axialer Richtung stromabwärts gesehen gerade noch über die Magnetspule 1 hinaus erstreckt. An das obere Gehäuseteil 14 schließt sich dicht und fest ein unteres rohrförmiges Gehäuseteil 18 an, das z. B. ein axial bewegliches Ventilteil bestehend aus einem Anker 19 und einer stangenförmigen Ventilnadel 20 bzw. einen langgestreckten Ventilsitzträger 21 umschließt bzw. aufnimmt. Die beiden Gehäuseteile 14 und 18 sind z. B. mit einer umlaufenden Schweißnaht fest miteinander verbunden.

In dem in Figur 1 dargestellten Beispiel sind das untere Gehäuseteil 18 und der weitgehend rohrförmige Ventilsitzträger 21 durch Verschrauben fest miteinander verbunden; Schweißen, Löten oder Bördeln stellen aber ebenso mögliche Fügeverfahren dar. Die Abdichtung zwischen dem Gehäuseteil 18 und dem Ventilsitzträger 21 erfolgt z. B. mittels eines Dichtrings 22. Der Ventilsitzträger 21 besitzt über seine gesamte axiale Ausdehnung eine innere Durchgangsöffnung 24, die konzentrisch zu der Ventillängsachse 8 verläuft.

Mit seinem unteren Ende 25, das auch zugleich den stromabwärtigen Abschluß des gesamten Brennstoffeinspritzventils darstellt, umgibt der Ventilsitzträger 21 ein in der Durchgangsöffnung 24 eingepasstes scheibenförmiges Ventilsitzelement 26 mit einer sich stromabwärts kegelstumpfförmig verjüngenden Ventilsitzfläche 27. In der Durchgangsöffnung 24 ist die z. B. stangenförmige, einen weitgehend kreisförmigen Querschnitt aufweisende Ventilnadel 20 angeordnet, die an ihrem stromabwärtigen Ende einen Ventilschließabschnitt 28 aufweist. Dieser beispielsweise kugelig oder teilweise kugelförmig bzw. abgerundet ausgebildete oder sich keglig verjüngende Ventilschließabschnitt 28 wirkt in bekannter Weise mit der im Ventilsitzelement 26 vorgesehenen Ventilsitzfläche 27 zusammen. Das axial bewegliche Ventilteil kann neben der dargestellten Ausführung mit Anker 19, Ventilnadel 20 und Ventilschließabschnitt 28 auch völlig anderweitig als axial beweglicher Ventilschließkörper, z.B. als Flachanker, ausgebildet sein. Stromabwärts der Ventilsitzfläche 27 ist im Ventilsitzelement 26 wenigstens eine erfindungsgemäß ausgestaltete Austrittsöffnung 32 für den Brennstoff eingebracht. Die Austrittsöffnung 32 verläuft bei dem Beispiel gemäß Figur 1 konzentrisch zur Ventillängsachse 8 und endet an einer senkrecht zur Ventillängsachse 8 verlaufenden, ebenen unteren Stirnseite des Ventilsitzelements 26.

Die Betätigung des Einspritzventils erfolgt in bekannter Weise elektromagnetisch. Ein Piezoaktor oder ein magnetostriktiver Aktor als erregbare Betätigungselemente sind jedoch ebenso denkbar. Ebenso ist eine Betätigung über einen gesteuert druckbelasteten Kolben denkbar. Zur axialen Bewegung der Ventilnadel 20 und damit zum Öffnen entgegen der Federkraft einer in der Längsöffnung 7 des Kerns 2 angeordneten Rückstellfeder 33 bzw. Schließen des Einspritzventils dient der elektromagnetische Kreis mit der Magnetspule 1, dem Kern 2, den Gehäuseteilen 14 und 18 und dem Anker 19. Der Anker 19 ist mit dem dem Ventilschließabschnitt 28 abgewandten Ende der Ventilnadel 20 z. B. durch eine Schweißnaht verbunden und auf den Kern 2 ausgerichtet. Zur Führung der Ventilnadel 20 während ihrer Axialbewegung mit dem Anker 19 entlang der Ventillängsachse 8 dient einerseits eine im Ventilsitzträger 21 am dem Anker 19 zugewandten Ende vorgesehene Führungsöffnung 34 und andererseits ein stromaufwärts des Ventilsitzelements 26 angeordnetes scheibenförmiges Führungselement 35 mit einer maßgenauen Führungsöffnung 55. Der Anker 19 ist während seiner Axialbewegung von dem Zwischenteil 4 umgeben.

Zwischen dem Führungselement 35 und dem Ventilsitzelement 26 ist ein weiteres scheibenförmiges Element, und zwar ein Drallelement 47 angeordnet, so dass alle drei Elemente 35, 47 und 26 unmittelbar aufeinanderliegen und im Ventilsitzträger 21 Aufnahme finden. Die drei scheibenförmigen Elemente 35, 47 und 26 sind z.B. stoffschlüssig fest miteinander verbunden.

Eine in der Längsöffnung 7 des Kerns 2 eingeschobene, eingepresste oder eingeschraubte Einstellhülse 38 dient zur Einstellung der Federvorspannung der über ein Zentrierstück 39 mit ihrer stromaufwärtigen Seite an der Einstellhülse 38 anliegenden Rückstellfeder 33, die sich mit ihrer gegenüberliegenden Seite am Anker 19 abstützt. Im Anker 19 sind ein oder mehrere bohrungsähnliche Strömungskanäle 40 vorgesehen, durch die der Brennstoff von der Längsöffnung 7 im Kern 2 aus über stromabwärts der Strömungskanäle 40 ausgebildete Verbindungskanäle 41 nahe der Führungsöffnung 34 im Ventilsitzträger 21 bis in die Durchgangsöffnung 24 gelangen kann.

Der Hub der Ventilnadel 20 wird durch die Einbaulage des Ventilsitzelements 26 vorgegeben. Eine Endstellung der Ventilnadel 20 ist bei nicht erregter Magnetspule 1 durch die Anlage des Ventilschließabschnitts 28 an der Ventilsitzfläche 27 des Ventilsitzelements 26 festgelegt, während sich die andere Endstellung der Ventilnadel 20 bei erregter Magnetspule 1 durch die Anlage des Ankers 19 an der stromabwärtigen Stirnseite des Kerns 2 ergibt. Die Oberflächen der Bauteile im letztgenannten Anschlagbereich sind beispielsweise verchromt.

Die elektrische Kontaktierung der Magnetspule 1 und damit deren Erregung erfolgt über Kontaktelemente 43, die noch außerhalb des Spulenkörpers 3 mit einer Kunststoffumspritzung 44 versehen sind. Die Kunststoffumspritzung 44 kann sich auch über weitere Bauteile (z. B. Gehäuseteile 14 und 18) des Brennstoffeinspritzventils erstrecken. Aus der Kunststoffumspritzung 44 heraus verläuft ein elektrisches Anschlusskabel 45, über das die Bestromung der Magnetspule 1 erfolgt. Die Kunststoffumspritzung 44 ragt durch das in diesem Bereich unterbrochene obere Gehäuseteil 14.

In den Figuren 2 und 3 sind zwei weitere Beispiele von Führungs- und Sitzbereichen dargestellt, wobei die gegenüber Figur 1 gleichbleibenden bzw. gleichwirkenden Teile durch die gleichen Bezugszeichen gekennzeichnet sind. Dabei soll verdeutlicht werden, dass alle Aussagen zur Herstellung und Ausbildung der Austrittsöffnungen 32 unabhängig von der Neigungsrichtung der Austrittsöffnungen 32 bzw. von der Ausgestaltung der die Austrittsöffnungen 32 aufweisenden Bauteile 26, 67 zu sehen sind.

Bei dem in Figur 2 gezeigten Beispiel hat das Ventilsitzelement 26 einen umlaufenden Flansch 64, der das stromabwärtige Ende des Ventilsitzträgers 21 untergreift. Die Austrittsöffnung 32 ist z.B. schräg geneigt zur Ventillängsachse 8 eingebracht, wobei sie stromabwärtig in einem konvex ausgewölbten Abspritzbereich 66 endet.

Das in Figur 3 gezeigte Beispiel entspricht weitgehend dem in Figur 2 dargestellten Beispiel, wobei der wesentliche Unterschied darin besteht, dass nun ein zusätzliches viertes scheibenförmiges Abspritzelement 67 in Form einer Spritzlochscheibe vorgesehen ist, das die Austrittsöffnung 32 aufweist. Im Vergleich zu Figur 2 ist also das Ventilsitzelement 26 stromabwärts der Ventilsitzfläche 27 nochmals geteilt. Das Abspritzelement 67 und das Ventilsitzelement 26 sind z.B. über eine mittels Laserschweißen erzielte Schweißnaht 68 fest miteinander verbunden, wobei die Verschweißung in einer ringförmig umlaufenden Vertiefung 69 vorgenommen ist. Neben dem Laserschweißen sind auch Bonden oder Widerstandsschweißen u.a. geeignete Fügeverfahren für diese Verbindung denkbar.

In den Figuren 4 bis 18 sind neun Varianten von Austrittsöffnungen 32 beispielhaft dargestellt. Dabei zeigen Figuren 4, 6, 8, 10, 12 und 14 Austrittsöffnungen 32 jeweils in einer Unteransicht, wobei die Blickrichtung auf die Austrittsöffnungen 32 in den Figuren 1 bis 3 mit Pfeilen 70 kenntlich gemacht ist. Entsprechend sind die Schnitte der Figuren 5, 7, 9, 11, 13 und 15 immer entlang der jeweiligen Öffnungsachse 71 vorgenommen, wobei die Öffnungsachse 71 nicht unbedingt mit der Ventillängsachse 8 zusammenfällt, wie die schräg geneigten Austrittsöffnungen 32 gemäß Figuren 2 und 3 beweisen.

Alle Austrittsöffnungen 32 zeichnet aus, dass sie in wenigstens zwei Herstellungsschritten konturiert werden. Die Austrittsöffnungen 32 gemäß Figuren 4 bis 13 und 16 bis 18 werden derart in dem jeweiligen Bauteil 26, 67 eingebracht, dass in einem ersten Verfahrensschritt ein Durchgangsloch erzeugt wird. Dies erfolgt in konventioneller Weise, wie bei Spritzlöchern von Einspritzventilen üblich, durch Stanzen, Erodieren oder Laserbohren. In einem zweiten Verfahrensschritt wird nachfolgend eine Konturierung des bis dahin beispielsweise kreisförmig (oder aber auch z.B. mit elliptischem Querschnitt) vorliegenden Durchgangslochs vom abspritzseitigen Ende des Durchgangslochs her vorgenommen. Dabei wird ein in Form und/oder Größe und/oder Kontur gegenüber dem Durchgangsloch veränderter abspritzseitiger Austrittsbereich 75 der Austrittsöffnung 32 erzeugt. In vorteilhafter Weise findet diese Konturierung der Austrittsöffnungen 32 mit einem nichtspanenden Fertigungsverfahren statt, wobei der Materialabtrag insbesondere berührungslos durch eine stark gebündelte, energiereiche Strahlung erfolgt. Als thermische Abtragverfahren bieten sich dabei besonders das Abtragen mit Elektronen- oder mit Laserstrahlen an.

Die Figuren 4 und 5 zeigen eine Austrittsöffnung 32, die einen kreisförmigen Querschnitt im Bereich des nicht weiter konturierten Durchgangslochs besitzt, an den sich ein sich in stromabwärtiger Richtung erweiternder Austrittsbereich 75 anschließt. Dieser Austrittsbereich 75 besitzt die Form eines achteckigen Pyramidenstumpfes. In den Figuren 6 und 7 ist dagegen ein Ausführungsbeispiel einer Austrittsöffnung 32 dargestellt, bei der der Austrittsbereich 75 sechseckig ausgeführt ist und die Wandungen des Austrittsbereichs 75 achsparallel zur Öffnungsachse 71 verlaufen. Eckige Austrittsbereiche 75 sind dabei nicht auf sechs oder acht Ecken beschränkt, vielmehr können sehr einfach und äußerst genau durch das Abtragen mit Elektronen- oder mit Laserstrahlen Austrittsbereiche 75 mit wenigstens drei Ecken in jeder beliebigen Eckenzahl ausgeformt werden. Durch die Eckigkeit des Austrittsbereichs 75 werden Inhomogenitäten im abzuspritzenden Spray erzeugt. Auf diese Weise werden Sprayeinschnürungen verhindert, die ansonsten beim Einspritzen bei hohem Gegendruck entstehen können. Von besonderem Vorteil ist es, wenn, wie anhand von Figur 1 beschrieben, der Brennstoff mit Drall beaufschlagt wird, da dann in dem konturierten Austrittsbereich 75 wirkungsvoll lokale Brennstoffanhäufungen erzeugt werden, die als Strähnen besonders beim direkten Einspritzen von Brennstoff in einen Brennraum erwünscht sind.

In den Figuren 8 bis 11 sind zwei Beispiele von Austrittsöffnungen 32 dargestellt, die anstelle eines eckigen Austrittsbereichs 75 einen kreisförmigen oder einen ovalen/elliptischen Austrittsbereich 75 aufweisen. In beiden Beispielen ist der Austrittsbereich 75 zweistufig ausgeführt, wobei der am weitesten stromabwärts liegende Abschnitt stets die größte Öffnungsweite hat. Während bei dem Beispiel gemäß Figuren 8 und 9 der erste Abschnitt 75' kreisförmig und der zweite Abschnitt 75" elliptisch ausgeführt sind, weisen der erste und der zweite Abschnitt 75', 75" bei dem Beispiel gemäß Figuren 10 und 11 jeweils einen kreisförmigen Querschnitt auf, wobei der Durchmesser des Abschnitts 75'' größer ist als der Durchmesser des Abschnitts 75'. Mit Hilfe solcher konturierten Austrittsöffnungen 32 lassen sich einfach Strahlaufweitungen realisieren, so dass die abgespritzten Sprays die Form eines runden oder ovalen Hohlkegels haben.

Die Figuren 12 und 13 zeigen ein Beispiel einer Austrittsöffnung 32, die einen kegelstumpfförmigen Austrittsbereich 75 besitzt. Neben einer sich in stromabwärtiger Richtung erweiternden konischen Ausführungsvariante, die in Figur 16 dargestellt ist, kann auch ein Austrittsbereich 75 erfindungsgemäß erzeugt werden, der sich in stromabwärtiger Richtung konisch verjüngt.

In den Figuren 14 und 15 ist eine Austrittsöffnung 32 dargestellt, die in einer anderen Herstellungsweise erzeugt wird. Anstelle eines Durchgangslochs wird in das Bauteil 26, 67 zuerst in einem ersten Verfahrensschritt ein Sackloch eingebracht, z.B. durch Erodieren oder Laserbohren. In einem zweiten Verfahrensschritt wird nachfolgend vom abspritzseitigen Ende des Bauteils 26, 67 aus die gewünschte Austrittsöffnung 32 konturiert. In vorteilhafter Weise findet diese Konturierung der Austrittsöffnung 32 wiederum mit einem nichtspanenden Fertigungsverfahren statt, wobei als Abtragverfahren besonders das Abtragen mit Elektronen- oder mit Laserstrahlen in Frage kommen. Im dargestellten Beispiel ist die Öffnungsweite des Austrittsbereichs 75 kleiner als die Öffnungsweite des zuvor eingebrachten Sacklochs.

In den Figuren 16 bis 18 sind drei weitere Beispiele von Austrittsöffnungen 32 dargestellt. Diese Austrittsöffnungen 32 weisen entweder einen konischen, sich in Strömungsrichtung kegelstumpfförmig erweiternden Austrittsbereich 75 (Figur 16) oder einen sich erweiternden, kugelabschnittförmigen, konkav gewölbten Austrittsbereich 75 (Figur 17) oder einen sich erweiternden, parabolischen, konvex gewölbten Austrittsbereich 75 (Figur 18) auf.

Den Figuren 1 bis 3 sind Austrittsöffnungen 32 entnehmbar, deren Eintrittsebenen jeweils mittig angeordnet sind, womit gemeint ist, dass die Öffnungsachse 71 genau in einer Eintrittsebene 78 der Austrittsöffnung 32 die Ventillängsachse 8 schneidet. Diese Schnittpunkte sind in den Figuren 2 und 3 mit S bezeichnet. Bei einer konzentrischen Ausbildung der Austrittsöffnung 32 zur Ventillängsachse 8, wie in Figur 1 gezeigt, fallen die Öffnungsachse 71 und die Ventillängsachse 8 zusammen. Es soll ausdrücklich darauf hingewiesen werden, dass eine solche mittige Ausbildung der Austrittsöffnung 32 bezüglich der Eintrittsebene 78 keineswegs eine Bedingung für das Brennstoffeinspritzventil ist. Vielmehr können die beschriebenen konturierten Austrittsöfnungen 32 auch außermittig eingebracht sein, so dass dann die jeweilige Eintrittsebene 78 einen Mittelpunkt hat, der nicht auf der Ventillängsachse 8 liegt. Besonders bei solchen außermittigen Austrittsöffnungen 32 ist es von Vorteil, wenn der Einlaufabschnitt der Austrittsöffnung 32 mit der Eintrittsebene 78 eine relativ kleine Öffnungsweite besitzt und der Austrittsbereich 75 dann deutlich aufgeweitet ist. Auf diese Weise können sogar bei außermittigen Austrittsöffnungen 32 im Ventilsitzelement 26 kleine Dichtdurchmesser an der Ventilsitzfläche 27 eingehalten werden.

Außer den bereits erwähnten Abtragverfahren mit Elektronen- oder mit Laserstrahlen sind auch andere Verfahren denkbar, mit denen eine Konturierung der Austrittsöffnung 32 von ihrem abspritzseitigen Ende aus möglich ist. Beispiele hierfür sind das Wasserstrahlschneiden oder das Formdrahterodieren.

## Patentansprüche

1. Verfahren zur Herstellung von Austrittsöffnungen an einem Ventil, insbesondere einem Brennstoffeinspritzventil, das einen Brennstoffeinlass (2), eine erregbare Betätigungseinrichtung (1, 2, 19), durch die ein Ventilschließglied (28) bewegbar ist, einen an einem Ventilsitzelement (26) ausgebildeten festen Ventilsitz (27), mit dem das Ventilschließglied (28) zum Öffnen und Schließen des Ventils zusammenwirkt, und wenigstens eine stromabwärts des Ventilsitzes (27) vorgesehene Austrittsöffnung (32) als Brennstoffauslass hat, wobei die wenigstens eine Austrittsöffnung (32) derart hergestellt wird, dass in einem ersten Verfahrensschritt ein Durchgangsloch erzeugt wird und in einem zweiten Verfahrensschritt von dem abspritzseitigen Ende des Durchgangslochs her ein in Form und/oder Größe und/oder Kontur gegenüber dem Durchgangsloch veränderter Austrittsbereich (75) erzeugt wird, **dadurch gekennzeichnet, dass** das Durchgangsloch mittels Stanzen, Erodieren oder Laserstrahlbohren ausgeformt wird und das Ausformen des Austrittsbereichs (75) mit einem nichtspanenden Fertigungsverfahren mittels einer stark gebündelten, energiereichen Strahlung, insbesondere mit Elektronen- oder mit Laserstrahlen, oder mittels Formdrahterodieren oder mittels Wasserstrahlschneiden erfolgt.

2. Verfahren nach Anspruch 1, **dadurch gekennzeichnet, dass** das in dem ersten Verfahrensschritt erzeugte Durchgangsloch einen kreisförmigen oder einen elliptischen Querschnitt hat.

3. Verfahren nach einem der Ansprüche 1 bis 2, **dadurch gekennzeichnet, dass** der in dem zweiten Verfahrensschritt erzeugte Austrittsbereich (75) der Austrittsöffnung (32) mehreckig ausgeformt wird.

4. Verfahren nach einem der Ansprüche 1 bis 2, **dadurch gekennzeichnet, dass** der in dem zweiten Verfahrensschritt erzeugte Austrittsbereich (75) der Austrittsöffnung (32) mit einem kreisförmigen oder elliptischen Querschnitt ausgeformt wird.

5. Verfahren nach einem der Ansprüche 1 bis 2, **dadurch gekennzeichnet, dass** der in dem zweiten Verfahrensschritt erzeugte Austrittsbereich (75) der Austrittsöffnung (32) konvex oder konkav gewölbt ausgeformt wird.

6. Verfahren nach einem der vorhergehenden Ansprüche, **dadurch gekennzeichnet, dass** der in dem zweiten Verfahrensschritt erzeugte Austrittsbereich (75) der Austrittsöffnung (32) in Strömungsrichtung aufeinanderfolgend mit mehreren Abschnitten (75', 75") ausgeformt wird, die sich in Form und/oder Größe und/oder Kontur voneinander unterscheiden.

7. Verfahren zur Herstellung von Austrittsöffnungen an einem Ventil, insbesondere einem Brennstoffeinspritzventil, das einen Brennstoffeinlass (2), eine erregbare Betätigungseinrichtung (1, 2, 19), durch die ein Ventilschließglied (28) bewegbar ist, einen an einem Ventilsitzelement (26) ausgebildeten festen Ventilsitz (27), mit dem das Ventilschließglied (28) zum Öffnen und Schließen des Ventils zusammenwirkt, und wenigstens eine stromabwärts des Ventilsitzes (27) vorgesehene Austrittsöffnung (32) als Brennstoffauslass hat, **dadurch gekennzeichnet, dass** die wenigstens eine Austrittsöffnung (32) derart hergestellt wird, dass in einem ersten Verfahrensschritt ein Sackloch von dem dem abspritzseitigen Ende gegenüberliegenden zulaufseitigen Ende erzeugt wird und in einem zweiten Verfahrensschritt von dem abspritzseitigen Ende der zu erzeugenden Austrittsöffnung (32) her ein Austrittsbereich (75) bis zum Sackloch so weit erzeugt wird, dass eine durchgehende Austrittsöffnung (32) entsteht, wobei das Sackloch mittels Erodieren oder Laserstrahlbohren ausgeformt wird und das Ausformen des Austrittsbereichs (75) mit einem nichtspanenden Fertigungsverfahren mittels. einer stark gebündelten, energiereichen Strahlung, insbesondere mit Elektronen- oder mit Laserstrahlen, oder mittels Formdrahterodieren oder mittels Wasserstrahlschneiden erfolgt.

8. Verfahren nach Anspruch 7, **dadurch gekennzeichnet, dass** der in dem zweiten Verfahrensschritt erzeugte Austrittsbereich (75) der Austrittsöffnung (32) mehreckig ausgeformt wird.

9. Verfahren nach Anspruch 7, **dadurch gekennzeichnet, dass** der in dem zweiten Verfahrensschritt erzeugte Austrittsbereich (75) der Austrittsöffnung (32) mit einem kreisförmigen oder elliptischen Querschnitt ausgeformt wird.

10. Verfahren nach Anspruch 7, **dadurch gekennzeichnet, dass** der in dem zweiten Verfahrensschritt erzeugte Austrittsbereich (75) der Austrittsöffnung (32) konvex oder konkav gewölbt ausgeformt wird.

11. Verfahren nach einem der Ansprüche 7 bis 10, **dadurch gekennzeichnet, dass** der in dem zweiten Verfahrensschritt erzeugte Austrittsbereich (75) der Austrittsöffnung (32) in Strömungsrichtung aufeinanderfolgend mit mehreren Abschnitten (75', 75") ausgeformt wird, die sich in Form und/oder Größe und/oder Kontur voneinander unterscheiden.

## Claims

1. Process for producing exit openings on a valve, in particular a fuel injection valve, which has a fuel inlet (2), an excitable actuating device (1, 2, 19) that can be used to move a valve-closing element (28), a fixed valve seat (27) which is formed on a valve seat element (26) and with which the valve-closing element (28) interacts to open and close the valve, and at least one exit opening (32) provided downstream of the valve seat (27) as fuel outlet, the at least one exit opening (32) being produced in such a manner that in a first process step a through-hole is produced, and in a second process step an exit region (75) whose shape and/or size and/or contour is modified with respect to the through-hole is produced from the discharge-side end of the through-hole, **characterized in that** the through-hole is formed by means of stamping, EDM or laser drilling, and the shaping of the exit region (75) is carried out using a manufacturing process which does not remove material, by means of a strongly focused, high-energy radiation, in particular using electron or laser beams, or by means of shaped wire EDM or by means of water jet cutting.

2. Process according to Claim 1, **characterized in that** the through-hole produced in the first process step is circular or elliptical in cross section.

3. Process according to either of Claims 1 and 2, **characterized in that** the exit region (75) of the exit opening (32) produced in the second process step is polygonal in shape.

4. Process according to either of Claims 1 and 2, **characterized in that** the exit region (75) of the exit opening (32) produced in the second process step is shaped with a circular or elliptical cross section.

5. Process according to either of Claims 1 and 2, **characterized in that** the exit region (75) of the exit opening (32) produced in the second process step is convexly or concavely curved in form.

6. Process according to one of the preceding claims, **characterized in that** the exit region (75) of the exit opening (32) produced in the second process step is formed with a plurality of sections (75', 75 ") which follow one another in the direction of flow and differ from one another in terms of shape and/or size and/or contour.

7. Process for producing exit openings on a valve, in particular a fuel injection valve, which has a fuel inlet (2), an excitable actuating device (1, 2, 19) that can be used to move a valve-closing element (28), a fixed valve seat (27) which is formed on a valve seat element (26) and with which the valve-closing element (28) interacts to open and close the valve, and at least one exit opening (32) provided downstream of the valve seat (27) as fuel outlet, **characterized in that** the at least one exit opening (32) is produced in such a manner that in a first process step a blind hole is produced from the feed-side end, which is the opposite end from the discharge-side end, and in a second process step an exit region (75) is produced all the way to the blind hole from the discharge-side end of the exit opening (32) that is to be produced, until a continuous exit opening (32) is formed, the blind hole being formed by means of EDM or laser drilling, and the shaping of the exit region (75) being carried out using a manufacturing process which does not remove material, by means of a strongly focused, high-energy radiation, in particular using electron or laser beams, or by means of shaped wire EDM or by means of water jet cutting.

8. Process according to Claim 7, **characterized in that** the exit region (75) of the exit opening (32) produced in the second process step is polygonal in shape.

9. Process according to Claim 7, **characterized in that** the exit region (75) of the exit opening (32) produced in the second process step is shaped with a circular or elliptical cross section.

10. Process according to Claim 7, **characterized in that** the exit region (75) of the exit opening (32) produced in the second process step is convexly or concavely curved in form.

11. Process according to one of Claims 7 to 10, **characterized in that** the exit region (75) of the exit opening (32) produced in the second process step is formed with a plurality of sections (75', 75'') which follow one another in the direction of flow and differ from one another in terms of shape and/or size and/or contour.

## Revendications

1. Procédé de réalisation d'orifices de sortie d'une soupape, notamment d'un injecteur de carburant comportant une arrivée de carburant (2), une installation d'actionnement excitable (1, 2, 19) qui permet d'entraîner un organe d'obturation de soupape (28), un siège de soupape fixe (27) réalisé sur un élément de siège de soupape (26) avec lequel coopère l'organe d'obturation de soupape (28) pour ouvrir et fermer la soupape (injecteur) et au moins un orifice de sortie (32) comme orifice de sortie de carburant prévu en aval du siège de soupape (27), cet au moins un orifice de sortie (32) étant réalisé dans une première étape de procédé par un orifice traversant dont dans une seconde étape de procédé on modifie une zone de sortie (75) par rapport à l'orifice traversant à partir de l'extrémité du côté éjection de l'orifice traversant, la modification concernant la forme et/ou la taille et/ou le contour,
**caractérisé en ce que**
l'orifice traversant est réalisé par emboutissage, érosion ou perçage par faisceau laser et la déformation de la zone de sortie (75) se fait par application d'un procédé de fabrication sans enlèvement de copeaux, d'un faisceau à forte énergie, fortement regroupé, notamment un faisceau d'électrons ou un faisceau laser ou par érosion par un fil mis en forme ou par des coupes au jet d'eau.

2. Procédé selon la revendication 1,
**caractérisé en ce que**
l'orifice traversant réalisé dans la première étape de procédé a une section circulaire ou elliptique.

3. Procédé selon l'une des revendications 1 à 2,
**caractérisé en ce que**
la zone de sortie (75) de l'orifice de sortie (32) réalisée dans la seconde étape de procédé a une forme polygonale.

4. Procédé selon l'une des revendications 1 à 2,
**caractérisé en ce que**
la zone de sortie (75) de l'orifice de sortie (32) réalisée par la seconde étape de procédé a une forme de section circulaire ou elliptique.

5. Procédé selon l'une des revendications 1 ou 2,
**caractérisé en ce que**
la zone de sortie (75) de l'orifice de sortie (32) réalisée par la seconde étape de procédé a une forme bombée convexe ou concave.

6. Procédé selon l'une des revendications précédentes,
**caractérisé en ce que**
la zone de sortie (75) de l'orifice de sortie (32) réalisée dans la seconde étape de procédé comporte dans le sens de l'écoulement, plusieurs segments successifs (75', 75") qui se distinguent les uns des autres par la forme et/ou la taille et/ou le contour.

7. Procédé de réalisation d'orifices de sortie d'une soupape, notamment d'un injecteur de carburant comportant une arrivée de carburant (2), une installation d'actionnement (1, 2, 19) susceptible d'être excitée, qui déplace un organe d'obturation de soupape (28), un siège de soupape (27) fixe, réalisé sur un élément formant siège de soupape (26), avec lequel coopère l'organe d'obturation de soupape (28) pour ouvrir et fermer l'injecteur et au moins un orifice de sortie (32) prévu en aval du siège de soupape (27) comme sortie de carburant,
**caractérisé en ce qu'**
au moins un orifice de sortie (32) est réalisé en formant dans une première étape de procédé un trou borgne à l'extrémité du côté alimentation, à l'opposé de l'extrémité d'éjection, et dans une seconde étape de procédé on réalise, à partir de l'extrémité du côté éjection de l'orifice de sortie (32), une zone de sortie (75) jusqu'au trou borgne, pour obtenir un orifice de sortie traversant (32), le trou borgne étant formé par érosion ou perçage par faisceau laser, et la déformation de la zone de sortie (75) se faisant par un procédé de fabrication sans enlèvement de copeaux à l'aide d'un faisceau riche en énergie, fortement regroupé, notamment d'un faisceau d'électrons ou d'un faisceau laser ou par érosion par fil mis en forme ou par découpe par jet d'eau.

8. Procédé selon la revendication 7,
**caractérisé en ce que**
la zone de sortie (75) réalisée par la seconde étape de procédé de l'orifice de sortie (32) est polygonale.

9. Procédé selon la revendication 7,
**caractérisé en ce que**
la zone de sortie (75) de l'orifice de sortie (32) réalisée dans la seconde étape de procédé a une section circulaire ou elliptique.

10. Procédé selon la revendication 7,
**caractérisé en ce que**
la zone de sortie (75) de l'orifice de sortie (32) réalisée par la seconde étape de procédé est bombée de forme convexe ou concave.

11. Procédé selon l'une des revendications 7 à 10,
**caractérisé en ce que**
la zone de sortie (75) de l'orifice de sortie (32) réalisée par la seconde étape de procédé comporte plusieurs segments (75', 75") qui se suivent dans le sens de l'écoulement, et qui se distinguent par la forme et/ou la taille et/ou le contour.
